# EUROPEAN PATENT APPLICATION

(11) **EP 2 793 103 A1**
(43) Date of publication of application: **22.10.2014**
(21) Application number: 13164036.9
(22) Date of filing: 17.04.2013
(51) Int. Cl.: G06F 3/023

(54) **Method for operating a text input interface**

(71) Applicant: Advanced Digital Broadcast S.A., 1292 Chambesy (CH)
(72) Inventor: Wielgosz, Marcin, 65-119 Zielona Gora (PL)
(74) Representative: Pawlowski, Adam

(57) **Abstract**

A method for operating a text input interface for a device (100) controllable via a controller (102), the method comprising the steps of displaying (202) a set of imputable characters (SC) arranged along a path (P) having a first portion (P1) and a second portion (P2) and inputted text (IT) between the first portion (P1) and the second portion (P2) of the path, receiving (203) input from a user via the controller (102), the input comprising at least a character shift command and a selection command, selecting (204), within the set of imputable characters (SC), a focused character (FC) in response to the received character shift command by navigating within the set of imputable characters (SC) according to the direction of the character shift command, adding (205) the focused character (FC) to the inputted text (IT) in response to the received selection command, wherein the imputable characters of the set of imputable characters (SC) arranged before the focused character (FC) are displayed (207) in the first portion (P1) of the path (P) and the imputable characters of the set of imputable characters (SC) arranged after the focused character (FC) are displayed (207) in the second portion (P2) of the path (P), the second portion (P2) following the first portion (P1) in the direction of text input.

## Description

The present invention relates to text input interfaces.

The role of a text input interface is to provide a device with information about a text that the user is intended to provide to the device. There are many types of text input interfaces, operable via many types of controllers. The most popular one, being an interface controllable via a keyboard has the drawback that the keyboard is a relatively large device and not available at many types of devices, such as hand-held mobile devices or television sets.

There are many types of so-called virtual keyboards, which allow text input by selecting signs from a keyboard displayed on screen of the device, using a controller of a limited functionality, allowing e.g. inputting commands such as up/bottom/left/right/ok. Such controller may be a reduced keyboard, a remote controller for a television set or a gesture-operated controller.

A US patent US6744427 discloses a rotary graphical user interface for inputting text and other information that allows the user to select and input textual information. The input interface includes three main components: a rotatable character or icon display in the form of a dial, a ring or appropriate electronic display; a means of unambiguously displaying or designating the currently selected character; and an entry mechanism for inputting the character data into the memory of the electronic device. The inputted text is located in the middle of the ring, which makes the text input troublesome, as the user has to move the eyesight between the inputted text and the ring for selecting a text item.

A US patent US8223127 presents a virtual wheel interface structure of a mobile terminal having a wheel input unit and a character input. A virtual keypad in a wheel shape is displayed on a display unit adjacent to the wheel input unit having a wheel, a selection, and navigation keys. The virtual wheel keypad includes a plurality of virtual keys disposed in the wheel rotation direction. A screen highlight and a cursor are displayed on the display unit. The screen highlight is located at a specific position on the virtual wheel keypad to select a virtual key, and the cursor indicates a character input position. If the wheel key rotates, the virtual wheel keypad rotates correspondingly and the screen highlight is located at a specific virtual key. A character allocated to the virtual key in the screen highlight is input by pressing the selection key or a navigation key, or by rotating the wheel key. The inputted text is displayed next to the wheel, so that the character in focus seems to be located next to the inputted text. However, the inputted text is displayed in a direction perpendicular to the direction of the character selection, which urges the user to analyze data on screen in two directions, which requires analysis of relatively large area of the screen and involves relatively large eye sight shifting.

It would be therefore desirable to improve that type of text input interface to increase its usability and to improve the speed of text input to efficiently use the text input interface.

The object of the invention is a method for operating a text input interface for a device controllable via a controller, the method comprising the steps of: displaying a set of imputable characters arranged along a path having a first portion and a second portion and inputted text between the first portion and the second portion of the path; receiving input from a user via the controller, the input comprising at least a character shift command and a selection command; selecting, within the set of imputable characters, a focused character in response to the received character shift command by navigating within the set of imputable characters according to the direction of the character shift command; adding the focused character to the inputted text in response to the received selection command; wherein the imputable characters of the set of imputable characters arranged before the focused character are displayed in the first portion of the path and the imputable characters of the set of imputable characters arranged after the focused character are displayed in the second portion of the path, the second portion following the first portion in the direction of text input.

Preferably, the method further comprises grouping the imputable characters in sub-sets and arranging the sub-sets within the set of imputable characters; receiving via the controller from the user the input further comprising a set shift command; selecting, within the set of imputable characters, a focused character from another subset than the subset of the currently focused character in response to the received set shift command.

Preferably, the method further comprises displaying a limited number of characters in the first portion and/or second portion of the path.

Preferably, the method further comprises displaying a predetermined number of characters starting each subset.

Preferably, the method further comprises displaying a predetermined number of characters adjacent to the focused character.

Preferably, the path has a shape of a straight line, an arc, a semi-circle, a curved line, a spiral or a zigzag.

Preferably, there is a subset of functional characters in the set of imputable characters, the functional characters having assigned a function, wherein upon selection of a functional character, the function assigned to that character is invoked.

Preferably, the function assigned to the functional character is related to a change of character input style.

Preferably, the method further comprises displaying a set of imputable words in another path inclined with respect to the path of imputable character set; receiving via the controller from the user the input further comprising a word shift command; selecting, within the set of imputable words, a focused word in response to the received set shift command and adding the focused word to focused text; adding the focused text to the inputted text in response to the received selection command.

The object of the invention is also a device comprising a controller interface, a display screen interface and a text input interface operable according to the method of the invention.

Another object of the invention is a computer program comprising program code means for performing all the steps of the method according to the invention when said program is run on a computer, as well as a computer readable medium storing computer-executable instructions performing all the steps of the method according to the invention when executed on a computer.

The object of the invention is shown by means of exemplary embodiment on a drawing, in which:
Fig. 1 shows schematically a structure of a device utilizing the text input interface,
Fig. 2-5 show exemplary embodiments of the text input interface in operation,
Fig. 6 shows schematically the steps of the method according to the invention.

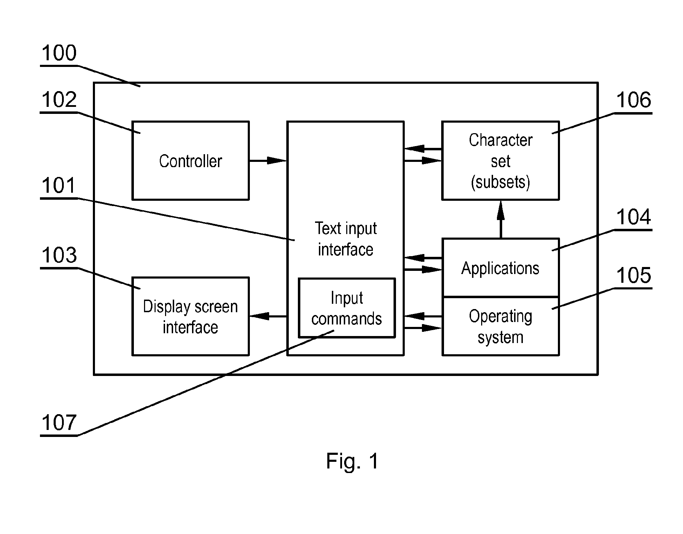

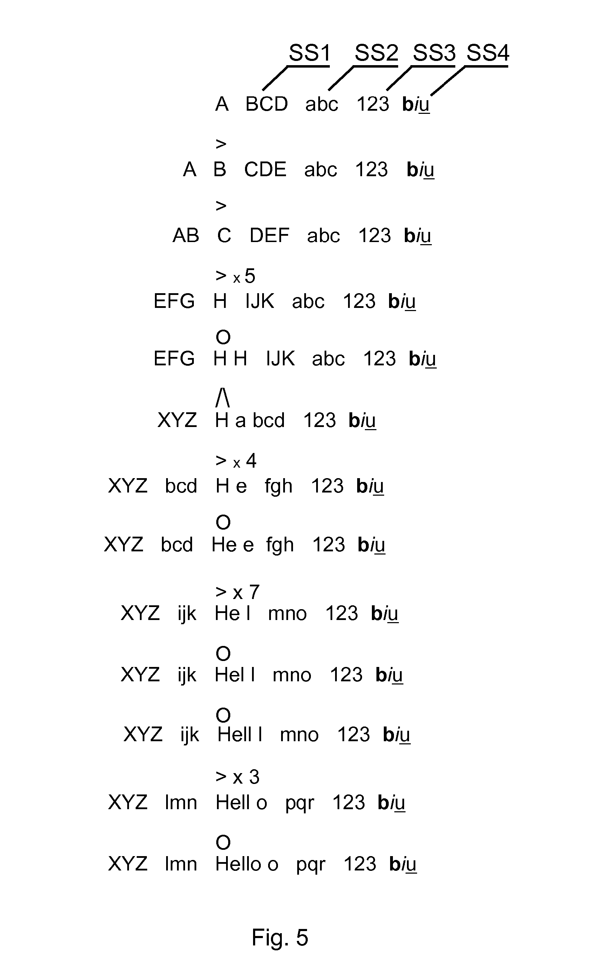

Fig. 1 shows schematically a structure of a device 100 comprising the text input interface 101 according to the invention. The interface 101 is configured to receive input from the user via a controller 102. The controller 102 may be remote from the device in which the text input interface is installed, e.g. may have a form of a Remote Control Unit (RCU) or may be integrated with the device, e.g. may comprise accelerometers built in a handheld device to read gestures or may comprise a camera for reading user movements. A display screen interface 103 is configured to output the graphical data generated by the interface 101, i.e. to control the display of the interface in response to the input received via the controller 102. The input commands are processed according to input command definitions 107 defined for the text input interface 101. The graphical data may be displayed as OSD (on-screen display) layers, pop-up windows or any other suitable GUI object. The operation of the device 100 is controlled by an operating system 104 and various applications 105. The text input interface 101 may be used to allow the user to interact with both the operating system 104 and the application 105, wherever there is a need to enter character-related data. The system 104 or application 105 to be controlled may provide the text input interface with a set of characters 106 that are acceptable, wherein subsets may be defined within the set according to the embodiment of Fig. 5. The set or subsets may be also defined as default by the text input interface 101.

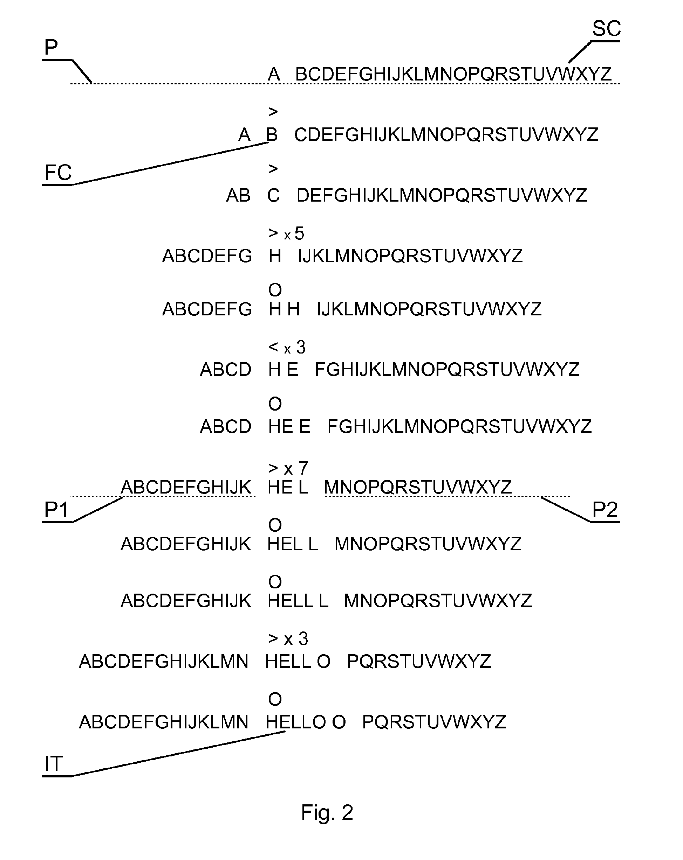

Fig. 2 shows a first embodiment of the text input interface according to the invention in operation. The text input interface allows inputting to the device characters from a set SC, which in this embodiment comprises uppercase letters. The characters are displayed and arranged along a path P having a first portion P1 and a second portion P2. The path may have a shape of a straight line, an arc, a semi-circle, a curved line, a spiral, a zigzag etc. The inputted text IT, i.e. the text comprising characters already selected by the user for input, is displayed between the first portion P1 and the second portion P2 of the path. The interface is controlled by the user via the controller 102, via which the user may input a plurality of commands, including a character shift command and a selection command. The following lines of Fig. 2 represent a command input and the change in appearance of the user interface display in response to that command. At first, the first letter of the set of imputable character is displayed as a focused character FC between the first portion P1 and the second portion P2 of the path and the following characters are displayed in the second portion P2 of the path. When the user inputs the command "shift character right" (>), the next character of the set is displayed as the focused character FC. The characters preceding the focused character FC are displayed in the first portion P1 of the path and the characters following the focused character FC are displayed in the second portion P2 of the path. When the user inputs the command "select" (O), the character in focus is added to the inputted text. The second portion of the path P1 follows the first portion of the path P2 in the direction of character input - in the example shown - from the left to the right, but other arrangements are possible as well, such as from the right to the left, from the bottom to the top, from the top to the bottom or in any direction along the path. In that embodiment the first letter of the inputted text IT is arranged at a constant point between the first portion P1 and the second portion P2 of the path.

By displaying the focused character next to the inputted text in the direction of input, the user is provided with intuitive interface which allows quick orientation within the entered text and does not require the user to move the eye focus around the screen, as was necessary with the previous interfaces. The eye sight of the user has to be concentrated in a single line, which limits the size of the screen that has to be analyzed by user eyesight.

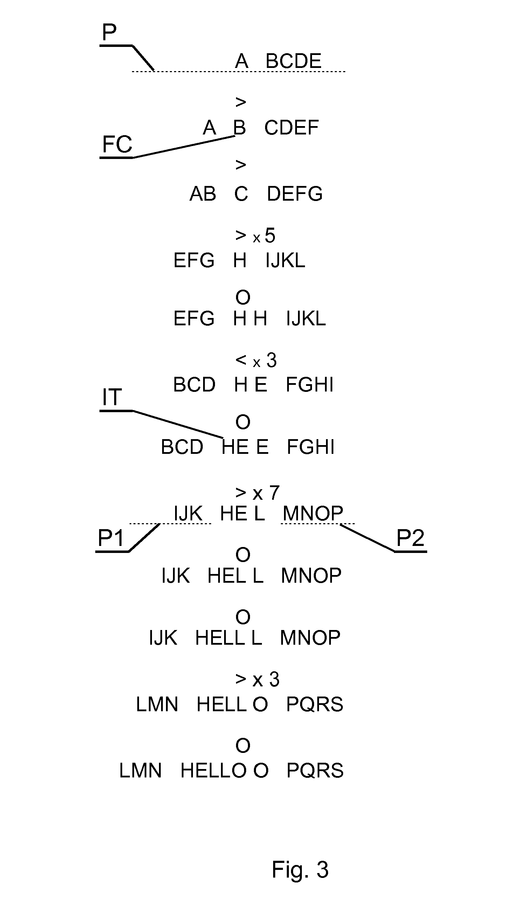

Fig. 3 shows a second embodiment of the text input interface during operation. It differs from the first embodiment in that only a predetermined number of characters is displayed in the first P1 and second P2 portion of the path - in this embodiment, three characters preceding the focused character FC and four characters following the focused character FC. Such arrangement allows optimization of display space. Moreover, in this embodiment the last character of the inputted text IT is arranged at a constant point between the first portion P1 and the second portion P2 of the path.

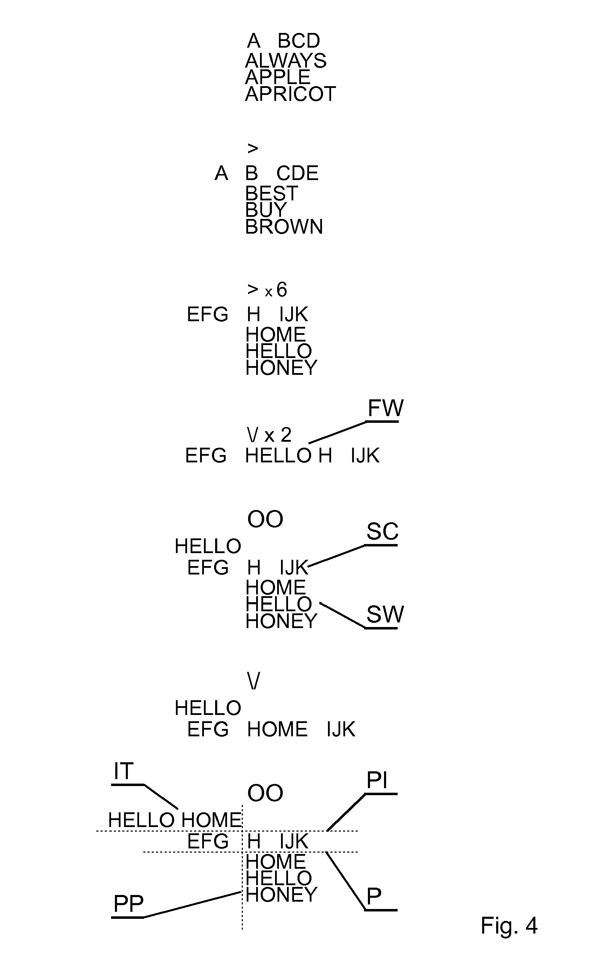

Fig. 4 shows a third embodiment of the text input interface during operation. In this embodiment, a set of imputable words SW is displayed in a path PP inclined, preferably parallel, to the imputable characters path P along which the set of characters SC is displayed. The controller 102 is configured to receive from the user an input further comprising a word shift command. The set of imputable words SW is preferably adapted to the currently inputted text IT or the focused character FC and may comprise the most popular words starting with the currently inputted text IT or the focused character. The popularity may be defined according to predetermined criteria, depending on the context of operation of the device, the analysis of the previously input text, the type of application which is navigated via the text input interface. For example, if the text input interface is used to navigate an Electronic Program Guide of a digital television decoder, the most popular words may be arranged depending on their occurrence in television program titles. Upon selection of the word shift command (V), a word is selected from the set of imputable words SW and is displayed as focused text. Upon selection of the word (OO), the word is added as inputted text IT. Furthermore, in this embodiment, the inputted text comprises more than one word. The words already inputted are displayed in a path PI arranged next to the path P with the set of characters, such as not to obstruct the word being currently input.

Fig. 5 shows a fourth embodiment of the text input interface according to the invention. In this embodiment the imputable characters are grouped into subsets SS1, SS2, SS3, which are arranged within the set of characters SC. In that embodiment, subset SS1 comprises uppercase letters, subset SS2 comprises lowercase letters, subset SS3 comprises numbers. The controller 102 is configured to further allow input of a set shift command (Λ). Upon receiving the set shift command, the focus is moved to a character from another subset, for example the first character or the last focused character of this set. In that embodiment, a limited number of characters of each subset is displayed.

Furthermore, a subset of functional characters SS4 can be displayed, the functional characters having assigned a function, preferably related to a change of character input style, such as change of case to upper/lower case, change of font style to bold/italic/underlined, etc. The functional characters may also define special commands such as activation of another application, closing of application, end of text input etc.

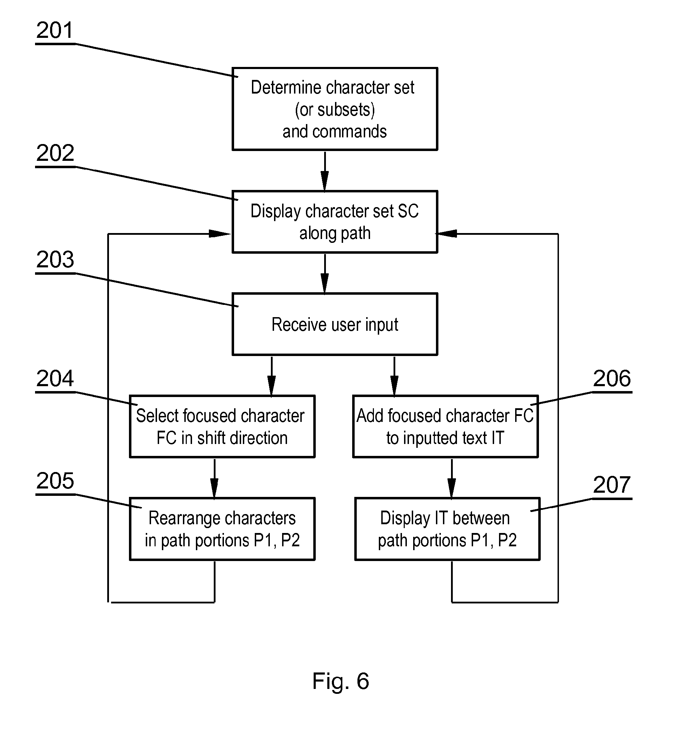

Fig. 6 presents schematically the steps of the basic embodiment of the method according to the invention. First, the interface is initiated in step 201 to determine the set or subsets of characters that are imputable and the commands that are acceptable from the user via the controller to navigate the character set. Next, the character set is displayed along the path P in step 202 and the procedure waits for user input in step 203. If the user enters a character shift command (marked as > or < on Figs. 2-5), then in step 204 the focused character FC is selected according to the direction of the shift command. Next, in step 205 the new focused character FC is displayed in place of the previous one. In case the user enters a character selection command (marked as O on Figs. 2-5), the focused character FC is added to the inputted text IT in step 206. In step 207 the display of the inputted text IT is updated between the portions P1, P2 of the path P, which may require shifting one of the portions in the text input direction or against the text input direction, depending on the alignment of the inputted text IT. Then, the procedure returns to step 202 to display the character set SC along portions P1, P2 of the path (which may be rearranged upon selection of a new focused character FC).

It can be easily recognized by one skilled in the art how to modify the schematic of Fig. 6 to implement further steps necessary to carry out the additional functionality of the text input interface as shown in the embodiments of Figs. 2-5.

It can be easily recognized, by one skilled in the art, that the aforementioned method for handling the gesture-controlled user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for operating a text input interface for a device (100) controllable via a controller (102), the method comprising the steps of:
• displaying (202) a set of imputable characters (SC) arranged along a path (P) having a first portion (P1) and a second portion (P2) and inputted text (IT) between the first portion (P1) and the second portion (P2) of the path,
• receiving (203) input from a user via the controller (102), the input comprising at least a character shift command and a selection command,
• selecting (204), within the set of imputable characters (SC), a focused character (FC) in response to the received character shift command by navigating within the set of imputable characters (SC) according to the direction of the character shift command,
• adding (205) the focused character (FC) to the inputted text (IT) in response to the received selection command,
• wherein the imputable characters of the set of imputable characters (SC) arranged before the focused character (FC) are displayed (207) in the first portion (P1) of the path (P) and the imputable characters of the set of imputable characters (SC) arranged after the focused character (FC) are displayed (207) in the second portion (P2) of the path (P), the second portion (P2) following the first portion (P1) in the direction of text input.

2. The method according to claim 1, **characterized by**:
• grouping the imputable characters in sub-sets (SS1-SS4) and arranging the sub-sets (SS1-SS4) within the set of imputable characters (SC),
• receiving via the controller (102) from the user the input further comprising a set shift command,
• selecting, within the set of imputable characters (SC), a focused character (FC) from another subset (SS1-SS4) than the subset (SS1-SS4) of the currently focused character (FC) in response to the received set shift command.

3. The method according to any of previous claims, **characterized by** displaying a limited number of characters in the first portion (P1) and/or second portion (P2) of the path.

4. The method according to claim 3, **characterized by** displaying a predetermined number of characters starting each subset (SS1-SS4).

5. The method according to claim 3, **characterized by** displaying a predetermined number of characters adjacent to the focused character (FC).

6. The method according to any of previous claims, **characterized in that** the path (P) has a shape of a straight line, an arc, a semi-circle, a curved line, a spiral or a zigzag.

7. The method according to any of previous claims, **characterized by** further comprising a subset (SS4) of functional characters in the set of imputable characters (SC), the functional characters having assigned a function, wherein upon selection of a functional character, the function assigned to that character is invoked.

8. The method according to claim 7, wherein the function assigned to the functional character is related to a change of character input style.

9. The method according to any of previous claims, **characterized by** further comprising:
• displaying a set of imputable words in another path (PP) inclined with respect to the path (P) of imputable character set (SC),
• receiving via the controller (102) from the user the input further comprising a word shift command,
• selecting, within the set of imputable words, a focused word (FW) in response to the received set shift command and adding the focused word (FW) to focused text,
• adding the focused text to the inputted text (IT) in response to the received selection command.

10. A device (100) comprising a controller interface (102), a display screen interface (103) and a text input interface (101) operable according to the method of any of claims 1-9.

11. A computer program comprising program code means for performing all the steps of the method according to any of claims 1-9 when said program is run on a computer.

12. A computer readable medium storing computer-executable instructions performing all the steps of the method according to any of claims 1-9 when executed on a computer.
